# EUROPEAN PATENT SPECIFICATION

(11) **EP 0 388 905 B1**
(45) Date of publication and mention of the grant of the patent: **02.03.1994**
(21) Application number: 90105273.8
(22) Date of filing: 20.03.1990
(51) Int. Cl.: B60J 7/08, B60H 1/26

(54) **Ventilation hatch for the driving cab of an industrial vehicle**
Lüftungslenke für die Fahrerkabine eines Lastkraftwagens
Panneau de ventilation pour une cabine de véhicule industriel

(30) Priority: 21.03.1989 IT 5296189 U
(43) Date of publication of application: 26.09.1990
(73) Proprietor: IVECO FIAT S.p.A., 10156 Torino (IT)
(72) Inventor: Savio, Piero, I-10040 Borgaretto (IT); Benazzato, Giovanni, I-10093 Collegno (IT)
(74) Representative: Boggio, Luigi

(56) References cited:
- DE-A- 3 030 818
- GB-A- 2 056 380

## Description

The present invention relates to a ventilation hatch for the driving cab of an industrial vehicle.

More particularly, the present invention relates to a hatch which advantageously may be used to allow both the ventilation of a driving cab of an industrial vehicle via a through-hole formed in the canopy of the cab itself, and access through the abovementioned hole by a person.

The hatches currently used for the purposes indicated above comprise essentially:
a frame designed to rest externally on the canopy portion surrounding the respective hole;
a hinge essentially C-shaped and defining a seat engaged, during use, by an end portion of the frame so as to allow rotation of the entire frame with respect to the seat itself;
means for fixing the frame to the canopy, designed to be operated manually from the inside of the cab;
a movable panel supported by the frame; and
means for effecting displacement of the panel with respect to the frame.

Normally the hinge is fixed to the canopy by means of a plurality of screws which make an external portion of the hinge integral with the canopy.

The known hatches of the type indicated above are known from the document GB-A-927 923 and have some drawbacks.

First of all, as a result of the methods of fixing the hinge to the canopy, the said hatches may be removed from the outside with relative ease, thus allowing undesired access to the inside of the driving cab.

Furthermore, the external shape of the frame, which has an air pocket at the front between the frame itself and the respective movable panel, gives rise, when the vehicle is moving, to an annoying whistling noise caused essentially by the formation of air eddies inside the abovementioned air pocket.

There are also known, from the documents GB-A-2 056 380 and DE-A-3 030 818, ventilation hatches including a panel tiltable on a hinge directly secured to the canopy of the cab, wherein the panel includes a hinge tongue piece adapted to be inserted into a C-shaped seat of the hinge, which is fitted into a water collecting channel secured to the canopy. The panel is removable upon disengaging from the canopy a handle pivoted on the panel and normally operable for locking and unlocking the panel. These hatches are particularly designed for private motor cars and shows no removable frame for a separatly tiltable ventilation panel.

The object of the present invention is to provide a ventilation hatch able to overcome the drawbacks of hatches of the known type having a panel movably supported by a frame, in turn tiltable and removable on a canopy.

The above object is achieved with the present invention which provides a ventilation hatch for a driving cab of an industrial vehicle, including a canopy defining an inside space of said cab, a through-hole formed in said canopy, a hinge secured to said canopy adjacent said through-hole and provided with a C-shaped seat defining a cavity, a substantially rectangular frame surrounding said through-hole, an end portion provided at one side of said frame and adapted to be releasably housed into said cavity to allow rotation and removal of said frame with respect to said seat, a panel movably supported by said frame, displacing means operable for displacing said panel with respect to said frame for the ventilation of said inside space, and locking means manually operable from said inside space irrespectively of said displacing means for locking and unlocking said frame and said panel on said canopy for allowing access by a person into said inside space through said through-hole, characterized in that said seat is delimited by a bottom portion of said hinge resting on a outer surface of said canopy, said bottom portion being coupled with said canopy by coupling means adapted to be handled from said cavity and engaging corresponding through-holes formed in said bottom portion.

So that the present invention may be understood more clearly, a preferred embodiment is described below, purely by way of non-limiting example and with reference to the attached drawings in which:
Figure 1 shows a hatch installed on a canopy of the cabin of an industrial vehicle;
Figure 2 is a cross-section, in the longitudinal direction and on an enlarged scale, of the hatch and of some details of the canopy of Figure 1; and
Figures 3 and 4 relate to schematic illustrations of possible uses of the abovementioned hatch.

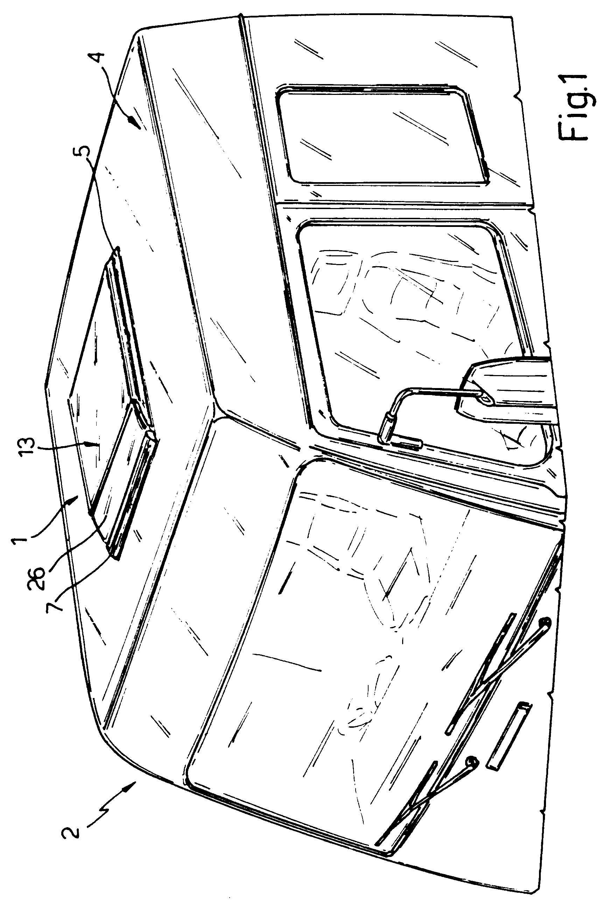

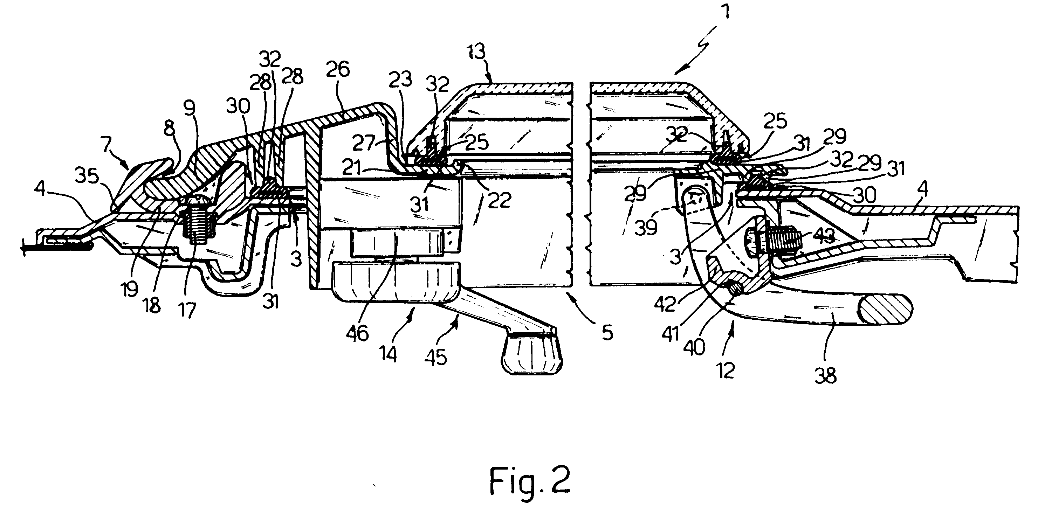

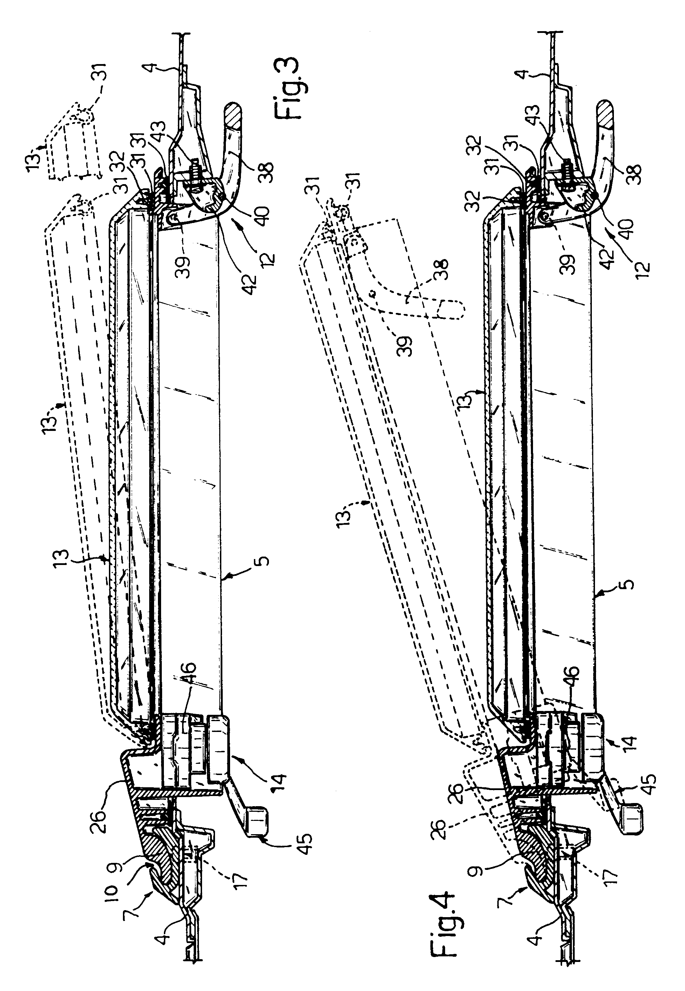

With particular reference to Figure 1, 1 denotes in its entirety a ventilation hatch which may be used essentially to allow ventilation of a driving cab 2 of an industrial vehicle via a through-hole (indicated by 3 in Figures 2 and 4) formed in the canopy 4 of the cab 2 mentioned.

The hatch 1, illustrated in detail in Figure 2, comprises essentially:
a frame 5 designed to rest externally on a portion of the canopy 4 surrounding the hole 3;
a hinge 7 essentially C-shaped and defining a seat 8 engaged, during use, by an end portion 9 of the frame 5 so as to allow rotation of the entire frame 5 with respect to the abovementioned seat 8;
means 12 for fixing the frame 5 to the canopy 4, designed, during use, to be operated manually from the inside of the cabin 2;
a movable panel 13 supported by the frame 5; and
means 15 for effecting displacement of the panel 13 with respect to the frame 5.

According to the present invention, the hinge 7 is designed to be fixed to the canopy 4 by means of a plurality of screws 17 which engage into through-holes 18 formed in a bottom portion of the hinge 7 resting, during use, on the surface of the canopy 4 and delimiting the seat 8. Therefore, these screws 17, during use, are covered by the end portion 9 of the frame 5.

The frame 5 has, an annular structure essentially rectangular in plan view with an internal wall 21 provided with an upwardly turned edge 22 defining a flat annular surface 23 for accommodating the panel 13, which rests on this surface via an annular seal 25 preferably made of elastomeric material.

The end portion 9 is connected to the internal wall 21 by means of a slanting wall 26 and a substantially vertical wall 27, which are suitably joined together. In particular, according to the present invention, the slanting wall 26 is inclined with respect to the wall 21 so as to join, during use, the hinge 7 to the panel 13 without creating appreciable air pockets which may give rise to turbulence, and hence whistling, when the vehicle is moving.

From the slanting wall 26 there extend downwards two equidistant projections 28 which support, together with respective projections 29 extending downwards from three sides of the wall 21, an additional annular seal 30 preferably made of elastomeric material.

The seals 25 and 30 are structurally identical; in particular, each of them has a tubular portion 31 from which there extends radially outwards a projection 32 which engages into a seat in the panel 13 or frame 5, respectively, in accordance with that already described substantially above.

The hinge 7 has, on the opposite side to the seat 8, an inclined front portion 35 which, during use, rests on the surface of the canopy 4 so as to make the join between the canopy 4 and the frame 5 as uniform as possible in the direction of movement of the vehicle and hence impact of the air when moving.

The means 12 for fixing the frame 5 to the canopy 4 essentially consist of a pair of handles 38 (only one of which is shown in cross-section in Figures 2, 3 and 4), each of which is supported rotatably about a pin 39 fixed to the frame 5 on the opposite side to that carrying the end portion 9.

Each handle 38 has, in a manner only partially illustrated, a U-shaped structure with the ends of the arms hinged with the respective pin 39 and has moreover a transverse pin 40 which joins together two intermediate portions of the abovementioned arms. The pin 40 engages, during use, into a concave seat 41 in an L-shaped bracket 42 fixed to the canopy 4 by means of a screw 43 (or also several screws).

Finally, the means 15 for effecting displacement of the panel 13 with respect to the frame 5 substantially consist of a winding arm 45 which operates a mechanism 46 of the conventional type not illustrated, so as to impart to the panel 13 a relative movement with respect to the frame 5. Purely by way of example, this relative movement could be of the type illustrated in Figure 3, where the panel moves away slightly from the frame 5 so as to avoid subjecting the seal 30 to inappropriate mechanical stressing, and then performs a rotational movement essentially about the joining line between the wall 21 and the wall 27 of the frame 5, and finally performs a sideways movement in the opposite direction to that in which the frame 5 is pivoted in the hinge 7.

Assembly of the hatch 1 on the canopy 4 of the cab 3 is performed as follows.

First of all, the hinge 7 and the bracket (or brackets) 42 are fixed to the canopy 4 by means of the respective screws 17 and 43. Subsequently, the frame 5 is raised as shown in broken lines in Figure 3, so that the end portion 9 thereof engages into the seat 8 of the hinge 7. At this point, it is sufficient to let the frame rest on the edge of the through-hole 3 of the canopy 4 and to operate the handle (or handles) 38 so as to obtain, by means of elastic deformation of the tubular portion 31 of the seal 30, engagement of the transverse pin 40 of the handle 38 in the concave seat 41 of the bracket 42.

The hatch 1 operates in accordance with that already substantially described above.

In particular, if solely ventilation of the cab 2 is required, it is necessary to operate simply the winding arm 45 so as to move the panel 13 by the required amount (see Figure 3).

Where, on the other hand, both the frame 5 and the associated panel 13 must be removed, it is necessary to proceed in the manner illustrated in Figure 4, simply releasing the handle 38 from engagement with the bracket 42, and then exert a pushing force outwards.

An examination of the characteristic features of the hatch provided in accordance with the present invention will reveal the advantages which can be achieved therewith.

Firstly, such a hatch can no longer be opened from the outside, since the screws for fixing the hinge 7 are now well protected by the end portion 9 of the frame 5.

Furthermore, it has been seen how the slanting wall 26 of the frame 5 joins the canopy 4 perfectly to the panel 13 and practically eliminates the annoying whistling effect which occurs in the current hatches on account of their imperfect aerodynamics.

Finally, the methods of fixing the frame 5 to the canopy 4 by means of the handle 38 make the actual fixing operation particularly practical and therefore also facilitate any operations to be performed under special emergency conditions where the occupants of the cab 2 may be required to leave via the canopy 4.

Finally, it is clear that modifications and variations may be made to the hatch 1 described above without departing from the present invention.

For example, it is obvious that the structure of the operating means 14 (winding arm 45 and mechanism 46) could be amply modified, using an electric motor equipped with a corresponding reducer.

Furthermore, the methods of relative displacement of the panel 13 with respect to the frame 5 could be amply varied, for example by having recourse to sliding guides with a suitable profile.

## Claims

1. Ventilation hatch for a driving cab of an industrial vehicle, including a canopy (4) defining an inside space of said cab (2), a through-hole (3) formed in said canopy (4), a hinge (7) secured to said canopy (4) adjacent said through-hole (3) and provided with a C-shaped seat (8) defining a cavity (10), a substantially rectangular frame (5) surrounding said through-hole (3), an end portion (9) provided at one side of said frame (5) and adapted to be releasably housed into said cavity (10) to allow rotation and removal of said frame (5) with respect to said seat (8), a panel (13) movably supported by said frame (5), displacing means (14) operable for displacing said panel with respect to said frame (5) for the ventilation of said inside space, and locking means (12) manually operable from said inside space irrespectively of said displacing means (14) for locking and unlocking said frame (5) and said panel (13) on said canopy (4) for allowing access by a person into said inside space through said through-hole (3), characterized in that said seat (8) is delimited by a bottom portion (19) of said hinge (7) resting on a outer surface of said canopy (4), said bottom portion (19) being coupled with said canopy (4) by coupling means (17) adapted to be handled from said cavity (10) and engaging corresponding through-holes (18) formed in said bottom portion (19).

2. Hatch according to claim 1, characterized in that said coupling means include a plurality of screws (17) each one crossing one of the through-holes (18) formed in said bottom portion (19) to be screwed into corresponding seats of said canopy (4).

3. Hatch according to claim 1 or 2, characterized in that said hinge (7) is provided with an inclined front portion (35) adapted to rest on the outer surface of said canopy (4), the outer surface of said front portion (35) flushly joining an outer surface of said hinge (7) with said canopy (4).

4. Hatch according to claim 3, characterized in that said frame (5) is provided with an internal wall (21) provided with an upwardly turned edge (22) defining a flat annular surface (23) for housing said panel (13), said end portion (9) being connected to a portion of said internal wall (21) by means of a flat and slanting wall (26) and of a substantially vertical wall (27), said slanting wall (26) flushly joining the outer surface of said hinge (7) with said panel (13) without creating any appreciable air pockets therebetween.

5. Hatch according to claim 4, characterized in that an annular seal (25) is provided between said annular surface (23) and said panel (13), said annular seal (25) being formed by a tubular portion (31) of an elastomeric material, said panel (13) being provided with an annular grooved seat housing a radial projection (32) extending outwards from said tubular portion (31).

6. Hatch according to claim 5, characterized in that a second annular seal (30) formed of another tubular portion (31) of an elastomeric material is located between said frame (5) and said canopy (4), said frame (5) being provided with another annular grooved seat (28, 29) housing a radial projection (32) of said second seal (30).

7. Hatch according to any one of the preceding claims, characterized in that the said means (12) for fixing the frame (5) to the canopy (4) essentially consist of a pair of handles (38), each of which is supported rotatably about a pin (39) fixed to the frame (5) on the opposite side to that carrying the said end portion (9).

8. Hatch according to Claim 7, characterized in that each said handle (38) has a U-shaped structure with the ends of respective arms hinged with the said pin (39) and has, moreover, a transverse pin (40) which joins together two intermediate portions of the said arms.

9. Hatch according to Claim 8, characterized in that the said pin (40) engages, during use and in a predetermined operating position, into a concave seat (41) in an L-shaped bracket (42) appropriately fixed to the said canopy (4).

## Patentansprüche

1. Belüftungsklappe für die Fahrerkabine eines Lastkraftfahrzeugs, mit einer Kabinenhaube (4), die einen Innenraum der Kabine (2) bildet, einer Durchgangsöffnung (3), die in der Kabinenhaube (4) ausgebildet ist, einem Scharnier (7), das an der Kabinenhaube angrenzend an die Durchgangsöffnung (3) befestigt und mit einem C-förmigen Sitz (8) versehen ist, der eine Ausnehmung (10) begrenzt, einem im wesentlichen rechtwinkligen Rahmen (5), der die Durchgangsöffnung (3) umgibt, einem Endbereich (9), der an einer Seite des Rahmens (5) vorgesehen ist und geeignet ist, lösbar in der Ausnehmung (10) aufgenommen zu werden und die Drehung und Abnahme des Rahmens (5) in bezug auf den Sitz (8) zu ermöglichen, einer Platte (13), die beweglich durch den Rahmen (5) getragen wird, einer Verschiebeeinrichtung (14) zur Verschiebung der Platte in bezug auf den Rahmen (5) zur Belüftung des Innenraums, und Verriegelungseinrichtungen (12), die manuell von dem Innenraum aus unabhängig von der Verschiebeeinrichtung (14) zum Verriegeln und Entriegeln des Rahmens (5) und der Platte (13) in bezug auf diese Kabinenhaube (4) zur Ermöglichung des Eintritts einer Person in den Innenraum durch die Durchgangsöffnung betätigbar sind, dadurch **gekennzeichnet,** daß der Sitz (8) durch einen Bodenbereich (19) des Scharniers (7) begrenzt ist, der auf der äußeren Oberfläche der Haube (4) ruht, welcher Bodenbereich (19) verbunden ist mit der Haube (4) durch eine Kupplungseinrichtung (17), die handhabbar ist von der Ausnehmung (10) und in entsprechende Durchgangsöffnungen (18) in dem Bodenbereich (19) eingreift.

2. Klappe nach Anspruch 1, dadurch **gekennzeichnet,** daß die Kupplungseinrichtung eine Anzahl von Schrauben (17) umfaßt, von denen jede durch eine der Durchgangsöffnungen (18) hindurchgeht, die in dem Bodenbereich (19) gebildet sind, und eingeschraubt ist in entsprechende Sitze der Haube (4).

3. Klappe nach Anspruch 1 oder 2, dadurch **gekennzeichnet,** daß das Scharnier (7) mit einem geneigten Vorderbereich (35) versehen ist, der vorgesehen ist zur Abstützung auf der äußeren Oberfläche der Haube (4), wobei die äußere Oberfläche des Vorderbereichs (35) die äußere Oberfläche des Scharniers (7) glatt mit der Haube (4) verbindet.

4. Klappe nach Anspruch 3, dadurch **gekennzeichnet,** daß der Rahmen (5) mit einer Innenwand (21) versehen ist, die einen aufwärts gebogenen Rand (22) aufweist, der eine flache ringförmige Oberfläche (23) zur Aufnahme der Platte (13) bildet, welcher Endbereich (9) verbunden ist mit einem Bereich der Innenwand (21) mit Hilfe einer flachen, geneigten Wand (26) und einer im wesentlichen senkrechten Wand (27), welche geneigte Wand (26) die äußere Oberfläche des Scharniers (7) glatt mit der Platte (13) verbindet, ohne dazwischen nennenswerte Lufttaschen zu bilden.

5. Klappe nach Anspruch 4, dadurch **gekennzeichnet,** daß eine ringförmige Dichtung (25) zwischen der ringförmigen Oberfläche (23) und der Platte (13) vorgesehen ist, welche ringförmige Dichtung (25) gebildet ist durch einen schlauchförmigen Bereich (31) und einem elastomeren Material, welche Platte (13) mit einem ringförmigen Nutsitz versehen ist, der einen radialen Vorsprung (32) aufnimmt, der sich von dem schlauchförmigen Bereich (31) nach außen erstreckt.

6. Klappe nach Anspruch 5, dadurch **gekennzeichnet,** daß eine zweite ringförmige Dichtung (30) aus einem anderen schlauchförmigen Bereich (31) aus einem elastomeren Material zwischen dem Rahmen (5) und der Haube (4) angeordnet ist, welcher Rahmen (5) einen anderen ringförmigen Nutsitz (28,29) aufweist, der einen radialen Vorsprung (32) der zweiten Dichtung (30) aufnimmt.

7. Klappe nach einem der vorhergehenden Ansprüche, dadurch **gekennzeichnet,** daß die Einrichtungen (12) zur Befestigung des Rahmens (5) auf der Haube (4) im wesentlichen bestehen aus zwei Handgriffen (38), von denen jeder drehbar in bezug auf einen Stift (38) gehalten ist, der an dem Rahmen (5) auf der gegenüberliegenden Seite zu derjenigen, die den Endbereich (9) trägt, angebracht ist.

8. Klappe nach Anspruch 7, dadurch **gekennzeichnet,** daß der Handgriff (38) eine U-förmige Struktur aufweist und mit den Enden der jeweiligen Arme scharnierförmig an dem Stift (38) aufgehängt ist und im übrigen einen Querstift (40) aufweist, der die beiden Mittelbereiche der Arme verbindet.

9. Klappe nach Anspruch 8, dadurch **gekennzeichnet,** daß der Stift (40) beim Gebrauch und in einer vorgegebenen Betriebsposition in einen konkaven Sitz (41) in einem L-förmigen Bauteil (42) eingreift, das in geeigneter Weise an der Haube (4) befestigt ist.

## Revendications

1. Trappe d'aération pour une cabine de conduite de véhicule utilitaire, comprenant un pavillon (4) définissant un espace intérieur de ladite cabine (2), une ouverture de passage (3) agencée dans ledit pavillon (4), une charnière d'articulation (7) fixée sur ledit pavillon (4), adjacente à ladite ouverture de passage (3) et pourvue d'un siège en forme de C (8) définissant une cavité (10), un châssis sensiblement rectangulaire (5) entourant ladite ouverture de passage (3), une partie d'extrémité (9) prévue d'un cité dudit châssis (5) et agencée pour se loger, de manière amovible, dans ladite cavité (10) pour permettre la rotation et l'enlèvement dudit châssis (5) par rapport audit siège (8), un panneau (13) monté mobile sur ledit châssis (5), des moyens de déplacement (14) pouvant être manoeuvrés pour déplacer ledit panneau par rapport audit châssis (5) pour l'aération dudit espace intérieur, et des moyens de verrouillage (12) pouvant être manoeuvrés à la main à partir dudit espace intérieur, indépendamment desdits moyens de déplacement (14), pour verrouiller et déverrouiller ledit châssis (5) et ledit panneau (13) sur ledit pavillon (4), afin d'assurer l'accès à un utilisateur dans ledit espace intérieur à travers ladite ouverture de passage (3), caractérisée en ce que ledit siège (8) est délimité par une partie de fond (19) de ladite charnière (7) reposant sur une surface extérieure dudit pavillon (4), ladite partie de fond (19) étant accouplée audit pavillon (4) par des moyens d'accouplement (17) agencés pour être manipulés à partir de ladite cavité (10) et s'engageant en prise dans des trous traversants correspondants (18) ménagés dans ladite partie de fond (19).

2. Trappe selon la revendication 1, caractérisée en ce que lesdits moyens d'accouplement comprennent une pluralité de vis (17), chacune d'elles traversant l'un des trous traversants (18) ménagés dans ladite partie de fond (19) pour être vissées dans les sièges correspondants dudit pavillon (4).

3. Trappe selon la revendication 1 ou 2, caractérisée en ce que ladite charnière (7) est pourvue d'une partie avant inclinée (35) agencée pour porter sur la surface extérieure dudit pavillon (4), la surface extérieure de ladite partie avant (35) raccordant à fleur ou dans le même plan une surface extérieure de ladite charnière (7) audit pavillon (4).

4. Trappe selon la revendication 3, caractérisée en ce que ledit châssis (5) est pourvu d'une paroi intérieure (21) munie d'un bord retourné vers le haut (22) définissant une surface annulaire plate (23) pour abriter ledit panneau (13), ladite partie d'extrémité (9) étant reliée à une partie de ladite paroi intérieure (21) par l'intermédiaire d'une paroi plate et oblique (26) et d'une paroi sensiblement verticale (27), ladite paroi oblique (26) raccordant à fleur ou dans le même plan la surface extérieure de ladite charnière (7) et ledit panneau (13) sans créer de poches d'air notables entre les deux.

5. Trappe selon la revendication 4, caractérisée en ce qu'un joint annulaire (25) est prévu entre ladite surface annulaire (23) et ledit panneau (13), ledit joint annulaire (25) étant constitué par une partie tubulaire (31) en matériau élastomère, ledit panneau (13) étant pourvu d'un siège en forme de rainure annulaire abritant une saillie radiale (32) dirigée vers l'extérieur à partir de ladite partie tubulaire (31).

6. Trappe selon la revendication 5, caractérisée en ce qu'un second joint annulaire (30) constitué par une autre partie tubulaire (31) en matériau élastomère est placé entre ledit châssis (5) et ledit pavillon (4), ledit châssis (5) étant pourvu d'un autre siège en forme de rainure annulaire (28, 29) abritant une saillie radiale (32) dudit second joint (30).

7. Trappe selon l'une quelconque des précédentes revendications, caractérisée en ce que lesdits moyens (12) de fixation du châssis (5) sur le pavillon (4) consistent essentiellement en une paire de poignées (38), chacune d'elles étant montée à rotation sur un axe de pivot (39) fixé sur le châssis (5) sur le cìté opposé à celui supportant ladite partie d'extrémité (9).

8. Trappe selon la revendication 7, caractérisée en ce que chacune desdites poignées (8) a une structure en forme de U dont les extrémités des bras respectifs sont articulées sur ledit pivot (39) et comprend, en outre, un axe transversal (40) qui relie mutuellement deux parties intermédiaires desdits bras.

9. Trappe selon la revendication 8, caractérisée en ce que ledit axe (40) s'engage, en service et dans une position de fonctionnement prédéterminée, dans un siège concave (41) de la bride en forme de L (42) fixée de manière adéquate sur ledit pavillon (4).
